# EUROPÄISCHE PATENTSCHRIFT

(11) **EP 1 227 911 B1**
(45) Veröffentlichungstag und Bekanntmachung des Hinweises auf die Patenterteilung: **28.03.2007**
(21) Anmeldenummer: 01971701.6
(22) Anmeldetag: 08.09.2001
(51) Int. Cl.: B23Q 9/00, B23Q 1/48

(54) **ELEKTROHANDWERKZEUG MIT FUNKTIONSERWEITERNDEN ANBAUTEN**
ELECTRIC HAND TOOL WITH FUNCTION-ENHANCING ACCESSORIES
OUTIL A MAIN ELECTRIQUE AVEC PIECES RAPPORTEES ELARGISSANT SA FONCTIONNALITE

(30) Priorität: 21.09.2000 DE 10046815
(43) Veröffentlichungstag der Anmeldung: 07.08.2002
(73) Patentinhaber: ROBERT BOSCH GMBH, 70442 Stuttgart (DE)
(72) Erfinder: BERGNER, Joao, 71134 Aidlingen (DE); ENGELFRIED, Uwe, 73760 Ostfildern (DE); NOACK, Martin, 70771 Leinfelden (DE)
(74) Vertreter: Hörschler, Wolfram Johannes
(86) Internationale Anmeldenummer: PCT/DE2001/003452
(87) Internationale Veröffentlichungsnummer: WO 2002/024404

(56) Entgegenhaltungen:
- FR-A- 2 618 362
- GB-A- 2 202 488
- US-A- 4 044 805
- US-A- 4 685 496

## Beschreibung

### Technisches Gebiet

Elektrohandwerkzeuge werden üblicherweise mit einem Elektromotor ausgestattet, mit welchem ein Schneid- oder Bohrwerkzeug, im allgemeinen ein span-abhebendes Werkzeug angetrieben werden kann. Bei Elektrohandwerkzeugen, die Fräswerkzeuge aufnehmen, wird eine Erhöhung der Einsatzmöglichkeiten durch Anbauteile angestrebt, um so dem Anwender des Elektrowerkzeuges ein erweitertes Einsatzspektrum des Werkzeuges zu eröffnen (siehe z.B. US-A-4044805).

### Stand der Technik

Aus EP 0 830 923 A1 ist ein elektrisch angetriebenes Handwerkzeug bekannt. Dieses umfaßt einen in einem Gehäuse angeordneten Motor mit einem von dem Motor über ein Getriebe angetriebenen vertikal verstellbaren Fräskopf. Gemäß der aus EP 0 830 923 A1 bekannten Anordnung wird vorgeschlagen, daß der Elektromotor des Handwerkzeuges derart liegend angeordnet ist, daß seine Antriebswelle im wesentlichen senkrecht zur Drehachse des Fräskopfes angeordnet ist und eine erste Einstellvorrichtung zur manuellen, werkzeuglosen Einstellung des Fräskopfes in Vertikalrichtung ohne Veränderung der Lage des Motors und des Getriebes ermöglicht. Ferner ist gemäß der bekannten Lösung eine zweite Einstellvorrichtung vorgesehen, welche manuell und werkzeuglos eine seitliche Verschwenkung des Fräskopfes gestattet.

Bei dieser aus dem Stand der Technik bekannten Konfiguration eines Elektrohandwerkzeuges sind zwei voneinander unabhängig betätigbare Einstellvorrichtungen vorgesehen, von denen eine eine Vertikalverstellung des Fräskopfes ermöglicht, während die weitere Einstellvorrichtung am Elektrohandwerkzeug ein seitliches Verschwenken des Fräskopfes bewirkt. Da die zweite Einstellvorrichtung sich im wesentlichen parallel zur Antriebswelle des Fräskopfes erstreckt, bleibt benachbart zur das Fräswerkzeug umfassenden Öffnung kein Raum zum anbringen von Anbauelementen wie beispielsweise Parallelanschläge oder Zirkelanschläge. Dies ist im wesentlichen durch die Orientierung der zweiten Einstellvorrichtung am aus EP 0 830 923 A1 bekannten Handwerkzeug begründet, so daß sich an diesem Handwerkzeug die Einsatzmöglichkeiten des Handwerkzeuges erweiternde Anbauten kaum oder nur mit erhöhtem Aufwand anbringen und zuverlässig arretieren lassen.

### Darstellung der Erfindung

Das Elektrohandwerkzeug gemäß der Erfindung wird in Anspruch 1 definiert. Die abhängigen Ansprüche betreffen Weiterbildungen der Erfindung.

Mit der erfindungsgemäß vorgeschlagenen Lösung geht eine Vielzahl von Vorteilen für den das erfindungsgemäß verbesserte Elektrohandwerkzeug anwendenden Bediener hervor. Ein Elektrohandwerkzeug mit elektrischem Antrieb kann auf einfache Weise durch Verrastung der Aufnahmesektion einer Aufnahmeschiene in seiner Funktionalität vielschichtig erweitert werden.

An der Aufnahmeschiene selbst, die aus ineinander geschobenen U-Profilen aus metallischem Werkstoff oder auch aus Kunststoff bestehen kann, ist eine Zirkelspitze an einem schlittenförmig ausgebildeten Bauelement ausgebildet, sowie Verriegelungsvorrichtungen für das Einsetzen eines Parallelanschlages. Der Parallelanschlag, der aus Metall oder aus schlagfestem Kunststoff gefertigt sein kann, läßt sich in seiner Arbeitsposition an der Aufnahmeschiene durch eine halbe oder eine Dreiviertelumdrehung einer Klemmschraube in seiner jeweiligen Arbeitsposition festlegen. Die Führungsfläche des Parallelanschlages ist etwa mittig durch eine Aussparung unterbrochen, welche das im Spannfutter des Elektrohandwerkzeuges aufgenommene spanabhebende Werkzeug, sei es Fräskopf, ein Bohrer oder ein Schneidwerkzeug, halbkreisförmig umschließen.

Mit der an der Aufnahmeschiene in einem schlittenförmig ausgebildeten Bauteil relativ zur Aufnahmeschiene verschiebbaren Zirkelspitze, können Kreisausschnitte in unterschiedlichsten Materialien vorgenommen werden. Durch die Nähe der Zirkelspitze zum in der Symmetrieachse des Elektrowerkzeuges aufgenommenen Schneidwerkzeug lassen sich kleinste Durchmesser bis ca. 20 mm präzise herstellen. Die Führung des Elektrohandwerkzeuges um die eingestochene Zirkelspitze beim Ausschneiden von Kreisen, wird durch eine am der Zirkelspitze gegenüberliegenden Ende aufgenommenen Drehgriff begünstigt. Eine Verstellung des Radius' der auszuschneidenden Kreise kann auf einfache Weise durch Lösen der Klemmschraube an der Aufnahmeschiene und nachfolgendem Relativverschieben der beiden U-Profile der Aufnahmeschiene zueinander erfolgen. Beim Ausschneiden von Kreisen wird - bedingt durch die Reduktion der beweglichen Schnittstellen - eine stabile Krafteinleitung ermöglicht, die ein präzises Arbeiten zuläßt. Lediglich die Aufnahmesektion der Aufnahmeschiene wird am Aufnahmefuß des Elektrohandwerkzeuges verrastet und daraufhin in der Arbeitsposition arretiert. Nach Relativverschiebung der U-Profile der Aufnahmeschiene und Einstellung des Schneidradius sind alle Relativbewegungsmöglichkeiten erschöpft, so daß eine nahezu spielfreie Anordnung der Komponenten zueinander gewährleistet ist.

Eines der U-Profile der Aufnahmeschiene, vorzugsweise aus metallischem Werkstoff bestehend, ist in die aus Kunststoff gefertigte Aufnahmesektion eingegossen. An einem der U-Profile der Aufnahmeschiene kann eine Zirkelspitze vorzugsweise an einem schlittenförmig konfigurierten Bauteil ausgeführt angeordnet werden; am betreffenden U-Profil, an dem das schlittenförmige Bauteil mit daran ausgebildeter Zirkelspitze anbringbar ist, kann auch der Parallelanschlag eingeschoben werden und nach Verdrehung der Klemmschraube um eine halbe oder eine Dreiviertelumdrehung an einer im U-Profil ausgebildeten Klemmschiene fixiert werden.

Die Fixierung der Aufnahmesektion der Aufnahmeschiene erfolgt mittels eines in die Aufnahmesektion eingelassenen Drahtbügels mit Dreharretierung. Dazu sind die Enden des mehrfach verformten Drahtbügels in Aufnahmebohrungen der Aufnahmesektion eingelassen. Beim Umschließen des Aufnahmefußes eines Elektrohandwerkzeuges, greifen die mehrfach verformten Sektionen, d.h. die Rastnasen des Formbügels in eine Aussparung des Aufnahmefußes des Elektrohandwerkzeuges an mehreren Stellen ein. Durch Spannung eines Klemmbügels mittels eines Exzenterhebels läßt sich die Aufnahmesektion der Aufnahmeschiene einfach, werkzeuglos und schnell am Aufnahmefuß des Elektrohandwerkzeugs verrasten.

Die erfindungsgemäß vorgeschlagene Lösung einer werkzeuglos mit einem Aufnahmefuß eines Elektrowerkzeugs kuppelbaren Aufnahmesektion für funktionserweiternde Anbauten wie Parallelanschläge und Zirkelspitzenschnitten zeichnet sich durch leichteste Handhabung aus. Durch eine einfach zugängliche Klemmbügelanordnung kann insbesondere erreicht werden, das Aufnahmesektion und Aufnahmefuß in einer ersten Betriebsposition drehfest zueinander arretiert werden können und in einer anderen, zweiten Betriebsposition die Aufnahmesektion frei drehbar - jedoch durch einen einschiebbaren Formbügel in axialer Richtung gesichert - gegenüber dem Aufnahmefuß aufgenommen ist, was zur Bearbeitung von Kreisausschnitten in einem Werkstück sehr nützlich ist.

Eine an der Aufnahmesektion in radiale Richtung abstehende Aufnahmeschiene kann zur Erhöhung der Arbeitssicherheit an einander gegenüberliegenden Stellen - zum Beispiel in Gestalt von Aussparungen - in einer Ringwandung der Aufnahmesektion befestigt sein, was ein besonders sicheres Arbeiten gestattet. Oval konfigurierte oder sich in Längsrichtung in der Aufnahmeschiene erstreckende Öffnungen, erlauben die Sicht auf das Werkstück bzw. den darauf befindlichen Anriß.

An der dem Aufnahmefuß des Elektrowerkzeugs zuweisenden Stirnseite der Aufnahmesektion können Stützstirnflächen vorgesehen sein, die die vom Werkzeugbediener ausgeübten Druckkräfte aufnehmen, wodurch eine gleichmäßige Krafteinleitung in die Aufnahmesektion erreicht werden kann. Eine besonders leicht durchführbare Montage eines Parallelanschlags an einer Aufnahmesektion mit Aufnahmeschienen ist dadurch erzielbar, daß der Parallelanschlag an einem in der Aufnahmeschiene verfahrbaren Schlitten durch Arretierungen gehalten wird, deren Position in Rastöffnungen durch einen Kraft/Formschluß zwischen Überrastmitteln gewährleistet ist, die als von einer Arretierungsfläche überfahrbare Arretiernoppen ausgebildet sein können.

### Zeichnung

Anhand der Zeichnung wird die Erfindung nachstehend detaillierter erläutert.

Es zeigt:
Figur 1 die Unteransicht einer Aufnahmesektion der Aufnahmeschiene mit Parallelanschlag und Zirkelschlitten,
Figur 2 die Seitenansicht der einen Aufnahmefuß eines Elektrohandwerkzeuges umschließenden Aufnahmesektion gemäß Figur 1,
Figur 2a die Verriegelung des Parallelanschlages am schlittenförmigen Bauteil mit Zirkelspitze und Klemmbereich an einem U-Profil der Aufnahmeschiene,
Figur 3 eine Draufsicht auf eine teilweise geschnitten dargestellte Aufnahmesektion der Aufnahmeschiene,
Figur 3a eine Detailansicht einer Formbügel-Dreharretierung in der Aufnahmesektion,
Figur 4 die Aufnahmesektion, dargestellt ohne Aufnahmeschiene,
Figur 5 die Ausführungsvariante eines Parallelanschlages mit Aussparung in der Parallelanschlagführungsfläche,
Figur 6 den Aufnahmefuß eines Elektrohandwerkzeuges mit Aussparung zur Aufnahme eines verformten Drahtbügels der Aufnahmesektion,
Figur 7 das Einschieben eines mehrfach verformten Drahtbügels in die Aussparungen einer Aufnahmesektion,
Figur 8 den Formbügel eingefahren in Anlage seines Spannbereiches an eine Fläche, jedoch mit frei liegenden Formbügelenden,
Figur 9 das Eingreifen der Rastnasen des Formbügels in die Aussparung des Aufnahmefußes des Elektrohandwerkzeuges bei in der Aufnahmesektion fixierten Formbügelenden,
Figur 10 die Ansicht einer Ausführungsvariante eines mehrfach verformten Formbügels mit seitlich vorgesehenem Betätigungsknopf,
Figur 11 die sich einstellende Verriegelung der Aufnahmesektion einer Aufnahmeschiene am Aufnahmefuß des Elektrowerkzeugs an vier Stellen und
Figur 12 einen Formbügel in der Aussparung einer alternativ konfigurierten Aufnahmesektion mit Verletzungsschutz an der Zirkelspitze.

### Ausführungsvarianten

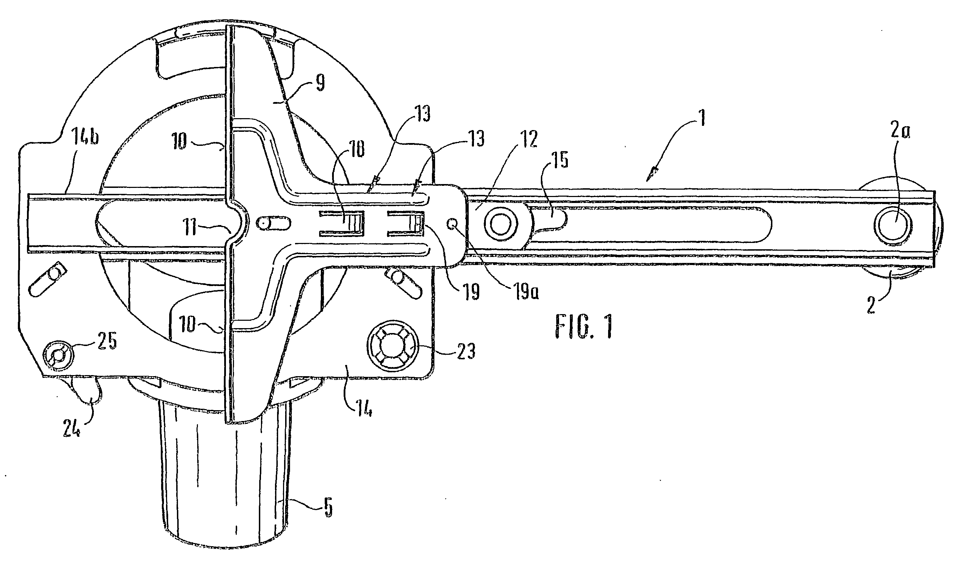

Figur 1 zeigt die Ansicht von unten einer Aufnahmesektion der Aufnahmeschiene mit Parallelanschlag und an einem Profil der Aufnahmeschiene gelagerten schlittenförmigen Bauteil mit daran ausgeführter Zirkelspitze.

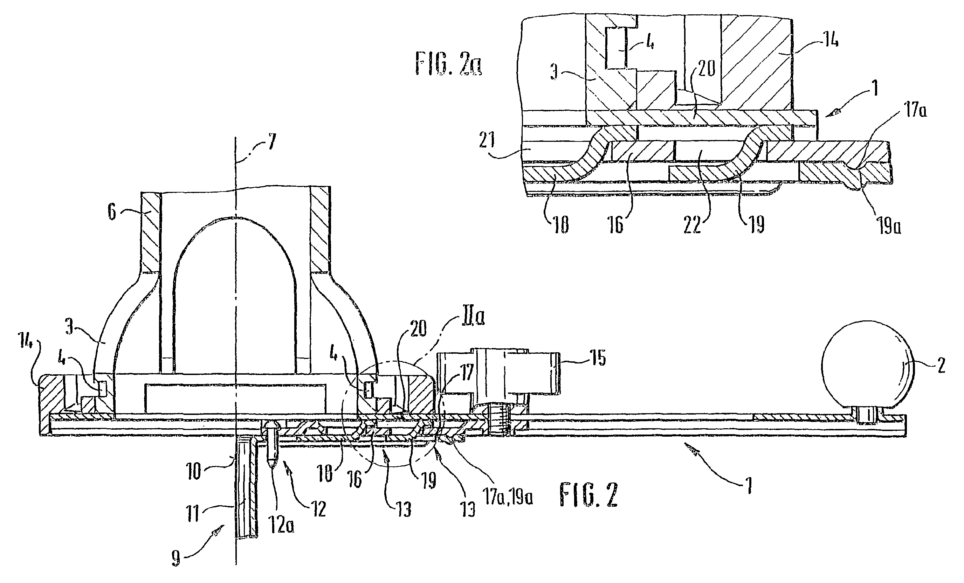

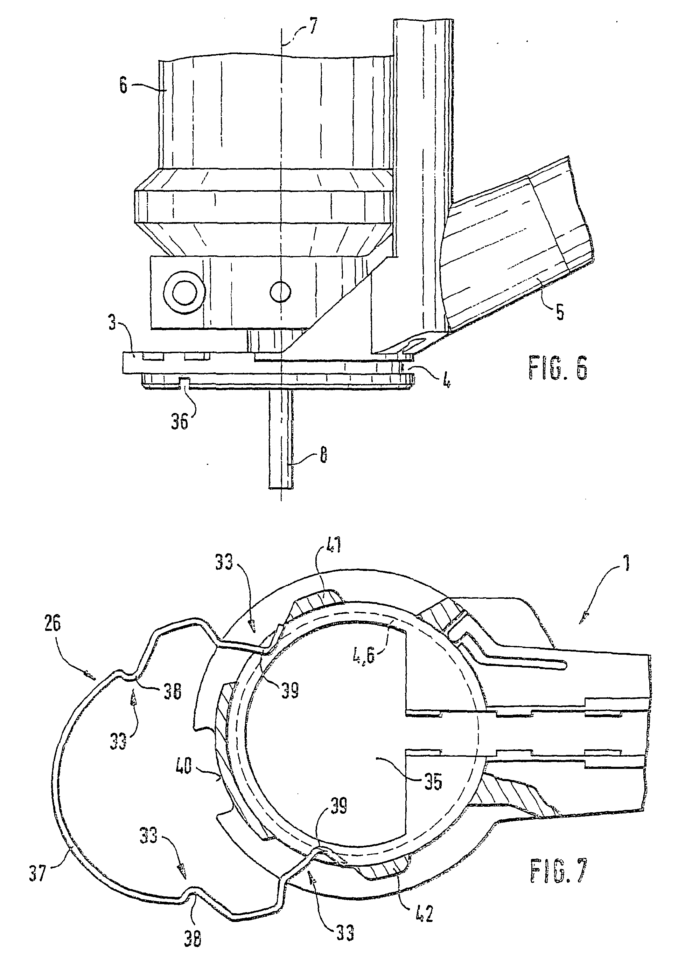

Aus der Darstellung gemäß Figur 1 geht eine Aufnahmesektion 14 einer Aufnahmeschiene 1 in der Ansicht von unten näher hervor. Die Aufnahmeschiene 1, die vorzugsweise aus zwei zueinander relativ beweglichen metallischen oder aus schlagfestem Kunststoff bestehenden U-Profilen besteht, ist in dieser Ausführungsvariante in die Aufnahmesektion 14, die vorzugsweise aus Kunststoff gefertigt ist, eingegossen. Am Ende der Aufnahmeschiene 1 ist ein drehbar aufgenommener Handgriff 2 vorgesehen. Mit Bezugszeichen 5 ist in der Darstellung gemäß Figur 1 der Spanaustrag eines hier nicht näher dargestellten Elektrohandwerkzeuges 6 dargestellt, über welches die durch das spanabhebende Werkzeug (vergl. Darstellung gemäß Figur 6) abgetragenen Späne abtransportiert werden können. In der Unteransicht ist an einem schlittenförmigen Bauteil 12, von dem in der Darstellung gemäß Figur 1 lediglich die Zirkelspitze 12 erkennbar ist, ein Parallelanschlag 9 aufgenommen. Die Führungsfläche 10 des Parallelanschlages 9 erstreckt sich im wesentlichen senkrecht zur Erstreckung der Aufnahmeschiene 1 und weist im Bereich der Symmetrieachse des Elektrohandwerkzeuges 6 (hier nicht dargestellt) eine Aussparung 11 auf. Die Aussparung 11 umgibt das im Spannfutter des Elektrohandwerkzeuges 6 aufgenommene spanabhebende Werkzeug 8 im wesentlichen halbkreisförmig. Am Parallelanschlag 9 sind Verriegelungsvorrichtungen 13 ausgeführt, welche ein Verrasten des Parallelanschlages 9 am schlittenförmigen Bauteil 12 an einem der U-Profile der Aufnahmeschiene 1 ermöglichen. Im dargestellten Ausführungsbeispiel sind die Verriegelungselemente 13 des Parallelanschlages 9 als Arretierzungen 18, 19 ausgebildet (vergl. Figur 2a).

An der Aufnahmesektion 14, die vorzugsweise als ein spritzgegossenes Kunststoffbauteil ausgebildet ist, ist mit Bezugszeichen 23 eine Klemmbügellagerung bezeichnet, während an einer Exzenterhebellagerung 25 ein Exzenterhebel 24 drehbar aufgenommen ist. Mittels des Exzenterhebels 24 läßt sich der bei Position 23 aufgenommene Klemmbügel, der hier nicht näher dargestellt ist, spannen oder entspannen.

Aus der Darstellung gemäß Figur 2 geht die Seitenansicht der einen Aufnahmefuß eines Elektrohandwerkzeuges umschließenden Aufnahmesektion 14 näher hervor. Mit Bezugszeichen 6 ist das Elektrohandwerkzeug in schematischer Anordnung bezeichnet, welches einen Elektroantrieb umfaßt, der im wesentlichen koaxial zur Symmetrieachse 7 des Elektrohandwerkzeugs 6 angeordnet ist. Mittels des hier nicht näher dargestellten, doch allgemein bekannten Elektroantriebs, wird ein im Spannfutter des Elektrohandwerkzeuges 6 aufgenommenes spanabhebendes Werkzeug, wie beispielsweise ein Fräskopf, mit höheren Drehzahlen angetrieben.

Im unteren Bereich des Elektrohandwerkzeuges 6 ist ein Aufnahmefuß 3 dargestellt, der eine diesen ringförmig umgebende Aussparung 4 aufweist. Die Aussparung 4 am Aufnahmefuß 3 des Elektrohandwerkzeuges 6 ist von einer Aufnahmesektion 14 der Aufnahmeschiene 1 umschlossen, die ihrerseits mit einer umlaufenden Aussparung versehen ist.

Am Ende der Aufnahmeschiene 1 ist ein drehbar in einem U-Profil der Aufnahmeschiene 1 gelagerter Handgriff 2 dargestellt. Weiterhin befindet sich an der Aufnahmeschiene 1 eine Klemmschraube 15, deren Gewinde mit einem schlittenförmigen Bauelement zusammenarbeitet, an dem eine Zirkelspitze ausgebildet ist und welches an einem U-Profil der Aufnahmeschiene 1 aufgenommen und durch die Bewegung der Klemmschraube 15 am betreffenden U-Profil in einer Arbeitsposition fixierbar ist. Unterhalb des schlittenförmigen Bauelementes 12 gemäß der Darstellung aus Figur 2 befindet sich der Parallelanschlag 9, an welchem im Bereich der Symmetrieachse 7 des Elektrohandwerkzeuges 6 eine halbkreisförmig in die Führungsfläche 10 des Parallelanschlages 9 eingreifende Aussparung 11 eingelassen ist. Der Parallelanschlag 9, der mittels Arretierzungen 18 bzw. 19 am schlittenförmigen Bauteil 12, an dem die Zirkelspitze ausgebildet ist, verrastbar ist, weist eine Öffnung auf, durch welche die Zirkelspitze des schlittenförmigen Bauteils 12 hindurch ragt. Zur Aufnahme der Arretierzungen 18 bzw. 19 des Parallelanschlages 9 ist das schlittenförmige Bauteil 12, an welchem die Zirkelspitze ausgeführt ist, mit Öffnungen versehen, durch welche die jeweiligen Arretierzungen 18 bzw. 19 des Parallelanschlages 9 reichen und an einer Klemmfläche 20 eines U-Profils der Aufnahmeschiene 1 anliegen.

Aus der Darstellung gemäß Figur 2a geht die Verriegelung eines Parallelanschlages an einem schlittenförmigen Bauteil mit Zirkelspitze und an der Klemmfläche eines U-Profils der Aufnahmeschiene näher hervor.

Aus der in vergrößertem Maßstab wiedergegebenen Figur 2a geht hervor, daß die Arretierzungen 18 bzw. 19, die am Parallelanschlag 9 ausgebildet sind, Öffnungen 21 bzw. 22 im schlittenförmigen Bauteil 12 durchsetzen und dabei sowohl Stege 16 bzw. 17 des schlittenförmigen Bauteils 12 übergreifen, als auch unterhalb einer Klemmfläche 20 eines der U-Profile der Aufnahmeschiene 1 liegen. Die Arretierzungen 18 bzw. 19 gemäß der Ausführungsvariante aus Figur 2a lassen sich fertigungstechnisch besonders einfach durch Stanzen herstellen. Wird die Klemmschraube 15 gemäß der Darstellung aus Figur 2 betätigt und damit das schlittenförmige Bauteil 12 in seiner Position am entsprechenden U-Profil der Aufnahmeschiene 1 festgelegt, werden die Arretierzungen 18 bzw. 19 zwischen den Stegen 16 und 17 des schlittenförmigen Bauteils 12 und der Klemmfläche 20 am betreffenden U-Profil der Aufnahmeschiene 1 geklemmt, so daß zum einen durch Verdrehung der Klemmschraube 15 ein Arretierung der schlittenförmigen Bauteils 12 und andererseits ein Verklemmen des Parallelanschlages 9 an einem U-Profil der Aufnahmeschiene 1 erreicht wird. Oberhalb der Klemmfläche 20 gemäß der Darstellung aus Figur 2a sind in vergrößerten Maßstab der Aufnahmefuß 3 des Elektrohandwerkzeuges 6 sowie die darin ausgebildete Aussparung 4 dargestellt, die von einer Aufnahmesektion 14 der Aufnahmeschiene 1 umschlossen wird, die ebenfalls mit einer Aussparung 34 versehen ist.

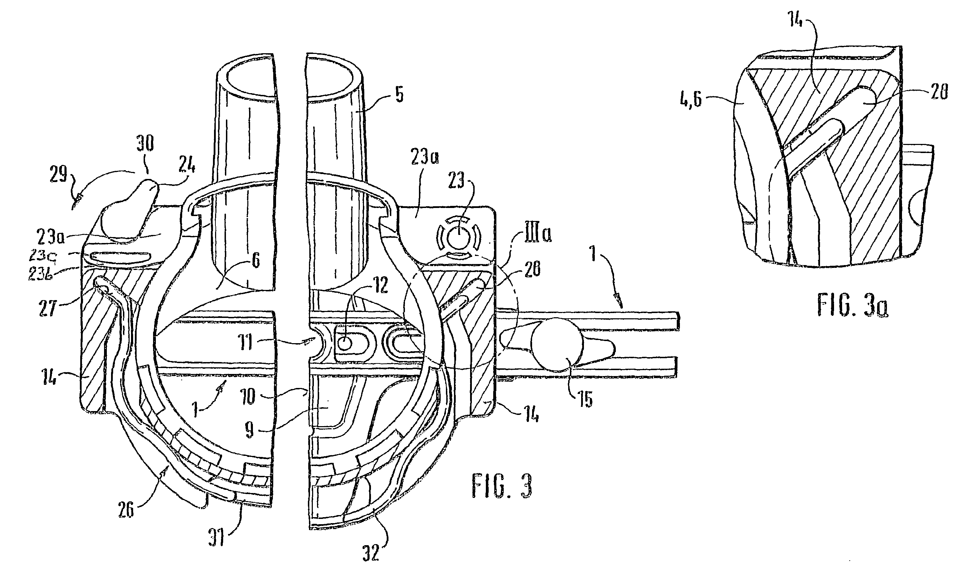

Aus der Darstellung gemäß Figur 3 geht eine Draufsicht auf eine teilweise in geschnitten dargestellter Aufnahmesektion der Aufnahmeschiene näher hervor.

Das in dieser Darstellung lediglich schematisch wiedergegebene Elektrohandwerkzeug 6 ist mit einem Spanaustrag 5 versehen, durch welchen die abgetragenen Späne das Elektrohandwerkzeug 6 verlassen. Die Aufnahmeschiene 1 ist mit der bereits im Zusammenwirken mit den Figuren 1 und 2 erwähnten Klemmschraube 15 versehen, durch welche die beiden U-Profile der Aufnahmeschiene 1 in Relativposition zueinander festlegbar sind.

Die Aufnahmesektion 14, die in der Darstellung gemäß Figur 3 in geschnittener Form dargestellt ist, umfaßt eine das Elektrohandwerkzeug 6 zumindest halbkreisförmig umfassende Aussparung 34. In diese ist im Ausführungsbeispiel gemäß Figur 3 ein Formbügel 26 eingeschoben. Die Enden des Formbügels 26, sind in Bohrungen 27 bzw. 28 der Aufnahmesektion 14 eingelassen. In der linken Hälfte von Figur 3 ist der Formbügel 26 in seiner Offenstellung 31 gezeigt, welche dadurch erkennbar ist, daß das Ende des jeweilige Formbügelschenkels vollständig in die Bohrung 27 in der Aufnahmesektion 14 eingeführt ist. Im rechten Teil der Figur 3 ist der Formbügel 26 in seiner Arbeitsposition 32 wiedergegeben. In der Arbeitsposition 32 ist das Ende des Schenkels des Formbügels 26 teilweise aus der Arretierungsbohrung 28 ausgefahren und liegt nur etwa hälftig an der Seitenwand der Bohrung 28 der Aufnahmesektion 14 an. In der Arbeitsposition 32 wird die Spannung, die zum Eintritt der Rastnasen des Formbügels 26 in die Aussparung 4 des Aufnahmefußes 3 des Elektrohandwerkzeuges 6 notwendig ist, mittels der Spannsektion 37 aufgebracht, wie nachstehend noch näher erläutert wird.

Im oberen Bereich der Aufnahmesektion 14 ist der um eine Klemmbügellagerung 23 schwenkbare Klemmbügel 23a wiedergegeben, der mittels eines Exzenterhebels 24 betätigbar ist. In Position 30 befindet sich der Exzenterhebel in seiner Offenstellung und kann entgegen des Uhrzeigersinns in seine Schließstellung 29 betätigt werden. Im Schließzustand 29 liegt die Anlagefläche des Klemmbügels an der Aufnahmesektion 14 an und umschließt den Aufnahmefuß 3 des Elektrohandwerkzeuges 6 drehfest. Im Schließzustand 29 des Klemmbügels 23a ist die Aufnahmesektion 1 in einer ersten Betriebsstellung gegenüber dem Aufnahmefuß 3 drehfest arretiert. Wird der Exzenterhebel 24 hingegen in seine Offenstellung 30 bewegt, läßt sich in einer zweiten Betriebsstellung des Klemmbügels 23a die Aufnahmesektion 14 relativ zum Aufnahmefuß 3 verdrehen, was insbesondere zur Herstellung von Kreisausschnitten in Werkstücken nützlich ist. Von der ersten und zweiten Betriebsposition des Klemmbügels 23a unabhängig, ist durch den Formbügel 26 gewährleistet, das Aufnahmesektion 14 und Aufnahmefuß 3 stets in axialer Richtung zueinander fixiert sind und in diese Richtung keine Relativbewegung zwischen Aufnahmefuß 3 und Aufnahmesektion 14 möglich ist, lediglich eine Verdrehung der Aufnahmesektion 14 und des Aufnahmefußes 13 in der ersten Betriebsstellung des Klemmbügels 23a, d.h. der Offenstellung 30 des Exzenterhebels 24.

Aus der Darstellung gemäß Figur 3 geht ferner hervor, daß das in die Aufnahmesektion 14 eingegossene U-Profil der Aufnahmeschiene 1 die Öffnung 35 in der Aufnahmesektion 14 durchsetzt und unterhalb der Aufnahmeschiene 1 der Parallelanschlag 9 mit Führungsfläche 10 und darin enthaltener Aussparung 11 dargestellt ist. Die halbkreisförmig konfigurierte Aussparung 11 umgibt das spanabhebende Werkzeug 8 (vergl. Figur 6) etwa halbkreisförmig. Am schlittenförmig über die Klemmschraube 15 in seiner Längsposition an der Aufnahmeschiene 1 festlegbaren Bauteil 12 ist die Zirkelspitze dargestellt, welche den darunter liegend aufgenommenen Parallelanschlag 9 im Bereich einer Längsbohrung durchsetzt.

Aus der Darstellung gemäß Figur 3a geht eine Detailansicht einer Forrnbügeldreharretierung in der Aufnahmesektion 14 der Aufnahmeschiene näher hervor. In dieser Darstellung befindet sich der Formbügel 26, von dem hier das Ende eines Schenkels in einer Arretierungsbohrung 28 dargestellt ist, in seiner Arbeitsposition 32 gemäß Figur 3. Der an mehreren Stellen zu Rastnasen geformte Formbügel 26 greift in seiner Arbeitsposition in die Aussparung 4 des Aufnahmefußes 3 des Elektrohandwerkzeuges 6 ein. Im gespannten Zustand 32 des Formbügels 26 dient die Wandung der Arretierungsbohrung 28 als Widerlager zur Aufnahme der durch die Spannung des Bügels in diesem erzeugten Kräfte.

Je nach Grad der Verformung des Formbügels 26 liegen dessen Rastnasen an mehreren Stellen über dem Umfang der im Aufnahmefuß 3 des Elektrohandwerkzeuges 6 ausgeführten Aussparung 4 an und bewirken eine axial sichere Fixierung der Aufnahmesektion 14 mit daran aufgenommener Aufnahmeschiene 1 relativ zum Elektrohandwerkzeug 6.

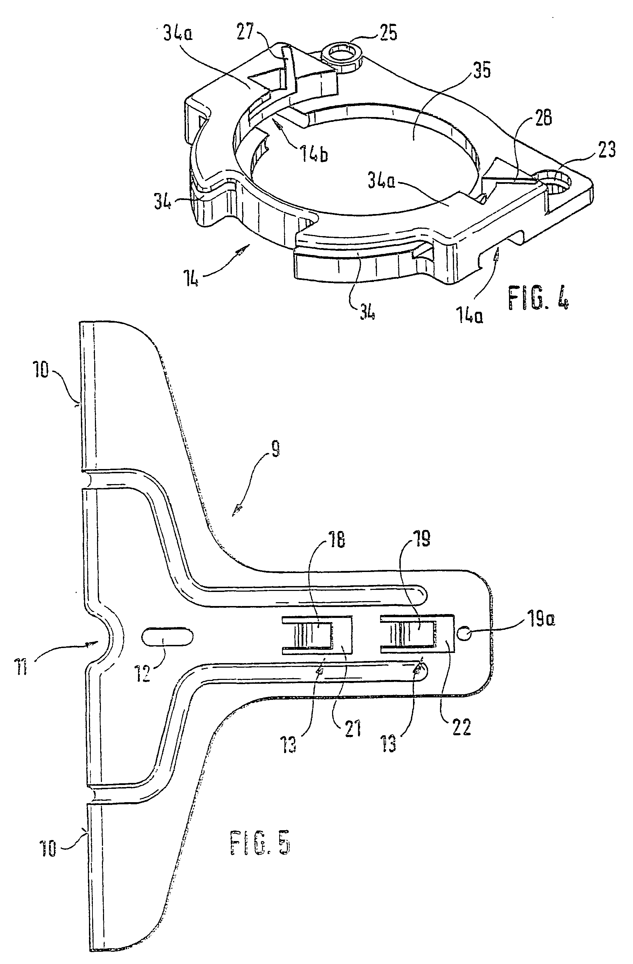

Aus der Darstellung gemäß Figur 4 geht die Aufnahmesektion - hier dargestellt ohne Aufnahmeschiene 1 - näher hervor.

Die Aufnahmesektion 14 einer Aufnahmeschiene 1 wird vorzugsweise als Spritzgußbauteil gefertigt, wobei eines der U-Profile der Aufnahmeschiene 1 in dieses eingegossen wird. Alternativ ist auch eine einstückige Ausbildung von Aufnahmesektion 14 und eines U-Profiles der Aufnahmeschiene 1 aus schlagfestem Kunststoff denkbar. Die Aufnahmesektion 14 gemäß der Darstellung aus Figur 4 wird von einer Öffnung 35 durchsetzt, welche den Aufnahmefuß 3 des Elektrohandwerkzeuges 6 aufnimmt. Die Aufnahmesektion 14 ist mit einer sich mindestens halbkreisförmig um die Öffnung 35 zur Aufnahme des Elektrohandwerkzeuges 6 erstreckenden Aussparung 34 versehen, in welche der Formbügel 26 aufgenommen ist. In der perspektivischen Darstellung gemäß Figur 4 werden die Enden des Formbügels 26, der in die Aussparung 34 der Aufnahmesektion 14 eingelassen ist, in den Arretierungsbohrungen 27 bzw. 28 aufgenommen. Dadurch ist mittels des in die Aussparung 34 eingelassenen Formbügels 26 eine Axialsicherung des in der Öffnung 35 aufzunehmenden Aufnahmefußes 3 des Elektrohandwerkzeuges gegen Verlieren gesichert, was eine sichere Handhabung der aus Elektrohandwerkzeug 6 und Aufnahmesektion 14 und eventuell daran aufgenommener funktionserweiternder Anbauten gewährleistet. An der als Spritzgußbauteil aus schlagfestem Kunststoff ausgeführten Aufnahmesektion 14 ist bei Bezugszeichen 23 eine Klemmbügellagerung vorgesehen, während dieser gegenüberliegend in der Exzenterhebellagerung 25 ein Exzenterhebel 24 drehbar aufgenommen ist. An dem Aufnahmefuß 3 des Elektrohandwerkzeuges 6 zuweisenden Stirnseite der Aufnahmesektion 14 können Stirnstützflächenabschnitte 34a ausgebildet sein, die an der Aufnahmesektion oberhalb der Aussparung 34 verlaufen. An den Stirnstützflächenabschnitten 34a wird die vom Werkzeugbediener aufgenommene Bearbeitungskraft in die Aufnahmesektion 14 gleichmäßig in diese eingeleitet.

Aus der Darstellung gemäß Figur 5 geht eine Ausführungsvariante eines Parallelanschlages mit einer Aussparung in der Parallelführungsfläche näher hervor.'

Der Parallelanschlag 9, der entweder aus Leichtmetall wie beispielsweise Aluminium oder aus schlagfestem Kunststoff gefertigt sein kann, weist eine Führungsfläche 10 auf, die sich im wesentlichen senkrecht zur Aufnahmeschiene 1 erstreckt. Die Führungsfläche 10 ist mittig, fluchtend mit der Symmetrieachse 7 des Elektrohandwerkzeuges 6 mit einer halbkreisförmigen Aussparung 11 versehen. Dieser umgibt das spanabhebende Werkzeug 8, welches im Spannfutter des Elektrohandwerkzeuges 6 aufgenommen ist. Am Parallelanschlag 9 sind Arretierungszungen 18, 19 ausgebildet, die in fertigungstechnisch besonders einfacher Weise als Stanzzungen ausgebildet sein können. Die Arretierungszungen 18 bzw. 19 treten erhaben über die ebene Ausführung des Parallelanschlages 9 hervor und werden in Stege 16 bzw. 17 eines schlittenförmigen Bauteils 12 eingelassen, übergreifen diese und liegen mit ihrer Oberseite an einer Klemmfläche 20 eines der U-Profile der Aufnahmeschiene 1 an. Mittels der Arretierungszungen 18 bzw. 19 kann der Parallelanschlag 9 besonders einfach zwischen den Stegen 16 und 17 des schlittenartigen Bauteils 12 und der Klemmfläche 20 des U-Profiles der Aufnahmeschiene 1 eingehängt werden.
Wie insbesondere den Figuren 2 bzw. 2a entnommen werden kann, kann eine Sicherung eines funktionserweiternden Anbauteils in Gestalt eines Parallelanschlages 9, 10 in seiner Arbeitsposition an der Aufnahmeschiene 1 durch Überrastmittel 17a, 19a erfolgen. Die an dem Parallelanschlag 9, 10 ausgebildeten Arretierungszungen 18, 19 greifen in entsprechend konfigurierte Rastöffnungen 21, 22 in einem schlittenartigen Gleitstück 12 ein. Zur Fixierung und als Verliersicherung überfahren beim Einclipsen der Arretierungszungen 18, 19 in die Rastöffnungen 20, 21 die Überrastmittel 17a bzw. 19a einander, so daß eine kraft-/formschlüssige Verliersicherung eines Parallelanschlages 9, 10 an der Klemmfläche des schlittenartigen Bauteils 12 ausgebildet ist. Mit Bezugszeichen 17a ist in den Darstellungen gemäß den Figuren 2 bzw. 2a ein Arretierungsnoppen bezeichnet, der von einer entsprechend konfigurierten Arretierungsfläche 19a überfahren wird und dadurch den Parallelanschlag 9, 10 verliersicher an der Klemmfläche 20 des schlittenartigen Bauteils 12 festlegt.

Der Parallelanschlag 9, sei es ein aus metallischem Werkstoff gefertigtes Bauteil oder ein Spritzgußbauteil aus schlagfestem Kunststoff weist eine Langlochöffnung auf, welche von der am schlittenartigen Bauteil 12 erhaben vorstehenden Zirkelspitze 12a durchsetzt wird.

Aus der Darstellung gemäß Figur 6 geht der Aufnahmefuß eines Elektrohandwerkzeuges 6 mit einer diesen ringförmig umschließenden Aussparung zur Aufnahme eines verformten Formbügels näher hervor.

Das Elektrohandwerkzeug 6, welches hier nur schematisch dargestellt ist, umfaßt eine Symmetrieachse 7, zu der in koaxialer Weise ein spanabhebendes Werkzeug 8 aufgenommen ist. Das spanabhebende Werkzeug 8 kann entweder ein Fräskopf, ein Bohrer oder sonstiges Schneidwerkzeug sein. Der Aufnahmefuß 3 des Elektrohandwerkzeuges 6 ist von einer ringförmig verlaufenden Aussparung 4 umgeben; ferner ist am Aufnahmefuß 3 des Elektrohandwerkzeuges 6 eine Zentrierung 36 ausgeführt. Seitlich am Elektrohandwerkzeug 6 ist ein Spanaustrag 5 angeordnet, über welchen die durch das spanabhebende Werkzeug 8, welches um die Symmetrieachse 7 rotiert, abgetragenen Späne des zu bearbeitenden Materials 9 aus dem Arbeitsbereich des spanabhebenden Werkzeugs 8 entfernt werden.

In bevorzugter Ausführungsweise des Elektrohandwerkzeuges 6 ist dieses so beschaffen, daß der das spanabhebende Werkzeug 8 antreibende Elektroantrieb koaxial zur Symmetrielinie 7 des Elektrohandwerkzeuges 6 aufgenommen ist. Dadurch läßt sich der Aufnahmefuß 3 des Elektrohandwerkzeuges 6 in bevorzugter Weise als ringförmig konfigurierter Bereich gestalten.

Aus der Darstellung gemäß Figur 7 geht das Einschieben eines mehrfach verformten Formbügels 26 in die Aussparung einer Aufnahmesektion 14 näher hervor.

Die Darstellung gemäß Figur 7 zeigt die alternative Ausführungsform einer Aufnahmeschiene 1, bei die Aufnahmesektion 14 und die Aufnahmeschiene 1 als einstückiges Spritzgußbauteil ausgeführt sind. Auch bei dieser Ausführungsvariante ist das mit der Aufnahmesektion 14 zu verrastende Elektrohandwerkzeug 6 im Bereich seines Aufnahmefußes 3 mit einer Aussparung 4 versehen. Die Aussparung 4 des Elektrohandwerkzeuges 6 wird im Bereich des Aufnahmefußes 3 von einem Formbügel 26 an mehreren Stellen in dessen Arbeitsposition durchsetzt, so daß eine form- und kraftschlüssige Verbindung zwischen dem Formbügel 26, der Aufnahmesektion 14 und der Aussparung 4 des Aufnahmefußes 3 des Elektrohandwerkzeuges 6 hergestellt wird.

Der Formbügel 26 erstreckt sich zumindest halbkreisförmig um die Öffnung 35 der Aufnahmesektion 14, in welcher der Aufnahmefuß 3 des Elektrohandwerkzeuges 6 aufgenommen wird. Der in der Darstellung gemäß Figur 7 wiedergegebene Drahtbügel 26 ist ein eindimensionales Bauteil, welches fertigungstechnisch als Drahtbügel besonders einfach herstellbar ist und eine etwa halbkreisförmige Spannsektion 37 umfaßt. In den beiden sich von der Spannsektion 37 aus erstreckenden Schenkeln sind jeweils eine erste Rastnase 38 sowie eine dieser nachgeordneten zweiten Rastnase 39 ausgebildet. Diese Rastnasen 38 bzw. 39 finden sich in beiden Schenkeln des eindimensionalen Formbügels 26 wieder. Die Enden der Schenkel des Formbügels 26 laufen in gekrümmten Bereichen aus, welche ihrerseits in den Arretierungsbohrungen 27 bzw. 28 gemäß der oben bereits geschilderten Aufnahmesektionen 14 drehfest verankert werden. An der in Figur 7 dargestellten Aufnahmesektion 14 sind Anschlagflächen 40 für den Formbügel 26 sowie Formnasen 41 bzw. 42 aufgenommen, welche den an mehreren Stellen verformten Formbügel 26 aufnehmen.

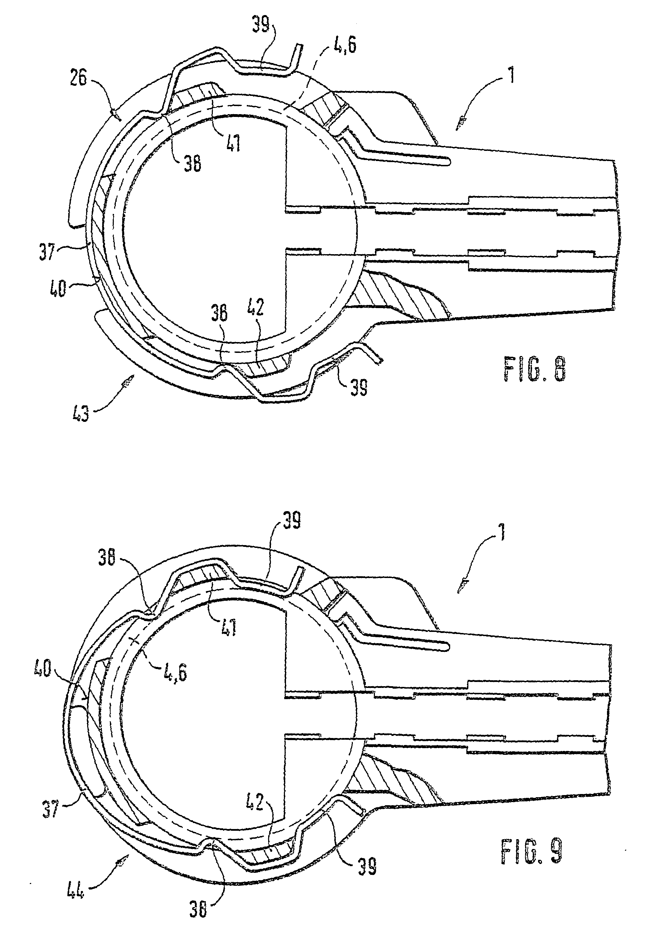

Aus der Darstellung gemäß Figur 8 geht ein Formbügel hervor, der in Anlage an die Anschlagfläche 40 der Aufnahmesektion 14 gebracht ist, wobei die Enden der frei auslaufenden Schenkel des Formbügels im in Figur 8 gezeigten Zustand nicht von Arretierungsbohrungen der Aufnahmesektion 14 umschlossen sind.

In seiner geöffneten Stellung gemäß Figur 8 liegt der Formbügel 26 mit seiner Spannsektion 37 an der Anschlagfläche 40 der Aufnahmesektion 14 an. Die Rastnasen 41 bzw. 42 der Aufnahmesektion 14 bilden Anschlagflächen für das erste Paar von einander gegenüberliegenden Rastnasen 38 der beiden Schenkel des Formbügels 26. Im in Figur 8 dargestellten Ausführungsbeispiel haben die Rastnasen 39 der beiden Schenkel des Formbügels 26 noch nicht ihre in die Aussparung 4 des Elektrohandwerkzeuges 6 eingreifende Position eingenommen, da die auslaufenden Enden der beiden Schenkel des Formbügels 6 noch nicht die Arretierungsbohrungen 27 bzw. 28 der Aufnahmesektion 14 eingerastet sind. Die Aufnahmeschiene 1 ist auch in der Darstellung gemäß Figur 8 mit der Aufnahmesektion 14 als einstückiges Bauteil ausgeführt, welches beispielsweise als ein Spritzgußbauteil aus schlagfestem Kunststoff gefertigt sein kann.

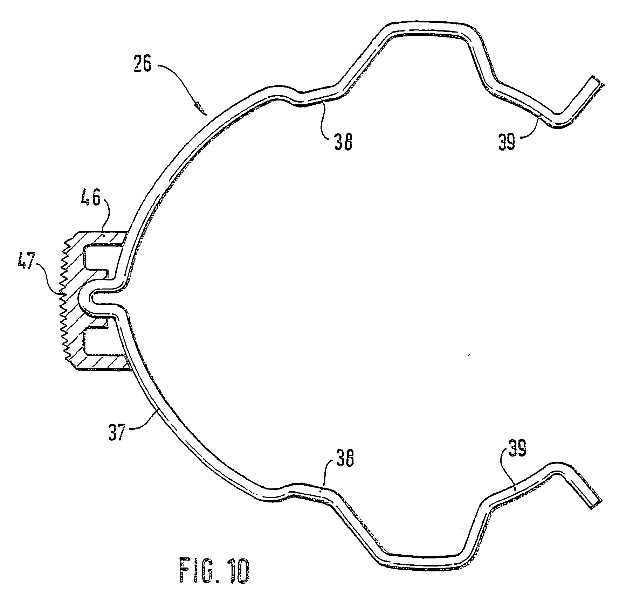

Aus der Darstellung gemäß Figur 9 geht das Eingreifen der Rastnasen des Formbügels in die Aussparung des Aufnahmefußes 3 des Elektrohandwerkzeuges 6 bei in der Aufnahmesektion 14 fixierten Formbügelenden näher hervor.

Aus der Darstellung gemäß Figur 9 geht hervor, daß im verrasteten Zustand des eindimensionalen Formbügels 26 in der Aussparung 4 des Elektrohandwerkzeuges 6 bei Aufnahme der auslaufenden Schenkelenden in den Arretierungsbohrungen 27 bzw. 28 der Aufnahmesektion 14 die Spannsektion 37 des Formbügels 26 sich von der Anschlagfläche 40 abhebt. Dadurch wird den Rastnasen 38 bzw. 39 der beiden Schenkel des Formbügels 26 eine Einfahrbewegung in die Aussparung 4 des Aufnahmefußes 3 des Elektrohandwerkzeuges 6 aufgeprägt. In in Figur 9 gezeigter Darstellung greifen die Rastnasen 38, 39 in die Aussparung 4 des Elektrohandwerkzeuges 6 ein und bilden einen Formschluß mit diesen. In diesem Zustand nimmt der Formbügel 26 seine Arbeitsposition 44 ein, wodurch Aufnahmesektionen 14 und Aufnahmefuß 3 des Elektrohandwerkzeuges 6 axial zueinander gesichert sind. Je nach Position des Exzenterhebels 24, sei es in Schließstellung 29, sei es in Offenstellung 30, und demzufolge bewirkter Position des Klemmbügels 23a, können die Aufnahmesektion 14 und der Aufnahmefuß 3 in einer ersten Betriebsposition oder in einer zweiten Betriebsposition zueinander gebracht werden und die Arbeiten mit einem solcher Art konfigurierten Elektrohandwerkzeugs 6 aufgenommen werden.

Aus der Darstellung gemäß Figur 10 geht die Ansicht einer Ausführungsvariante eines mehrfach verformten Formbügels mit dem seitlich vorgesehenen Betätigungsknopf näher hervor.

Der Formbügel 26 gemäß der Darstellung aus Figur 10 ist als ein federndes Bauteil konfiguriert, welches im wesentlichen als eindimensionale ausgeführtes Drahtbiegeteil ausgeführt ist. Dadurch läßt sich der Formbügel 26 sehr einfach herstellen, ferner läßt sich auf diese Weise eine symmetrische Ausführungsvariante herstellen und die Herstellkosten niedrig halten. In der Darstellung gemäß Figur 10 sind die beiden auslaufenden Schenkel des Formbügels 26 mit einem ersten Paar Rastnasen 38 bzw. einem zweiten Paar Rastnasen 39 versehen. Die beiden Auslaufschenkel des Formbügels 26 schließen sich an die Spannsektion 37 an. An der Spannsektion 37 ist eine Ausführungsvariante des Formbügels 26 für einen Betätigungsknopf 46 vorgesehen, der beispielsweise mit einer geriffelten Oberfläche 47 versehen sein kann. Mit dieser läßt sich die Spannsektion 26 in Richtung der Aussparung 4 bzw. 34 verschieben, so daß die Rastnasenpaare 38 bzw. 39 in der Aussparung 4 des Aufnahmefußes 3 des Elektrohandwerkzeuges 6 an ihren entsprechenden Raststellen zur Anlage kommen.

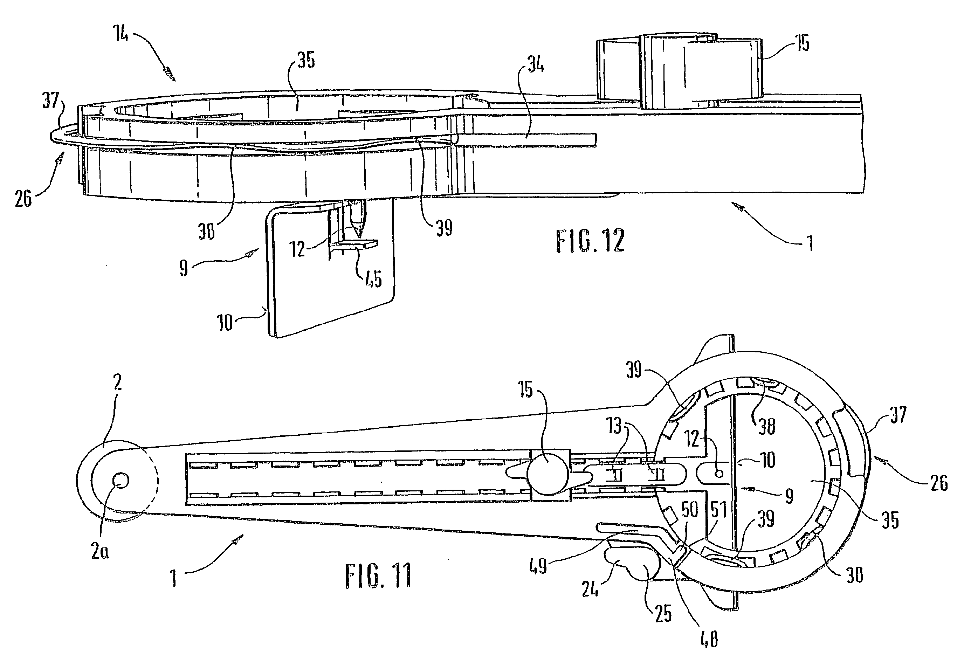

Aus der Darstellung gemäß Figur 11 geht die sich einstellende Verriegelung der Aufnahmesektion einer Aufnahmeschiene am Aufnahmefuß eines Elektrohandwerkzeuges näher hervor.

In der Darstellung gemäß Figur 11 ist eine Ausführungsvariante der Aufnahmeschiene 1 dargestellt, welche mit der Aufnahmesektion 14 als einstückiges Spritzgußbauteil gefertigt werden kann. An der Aufnahmeschiene 1 befindet sich eine Bohrung 2a zur Aufnahme eines Schraubenbolzens eines drehbaren Handgriffes 2 der in der Darstellung gemäß Figur 11 unterhalb der Aufnahmeschiene 1 liegt.

Ferner ist im der Aufnahmesektion 14 zuweisenden Bereich der Aufnahmeschiene 1 eine Klemmschraube 15 ausgebildet, mit welcher die beiden relativ zueinander verschiebbaren U-Profile der Aufnahmeschiene 1 in verschiedenen Arbeitsposition zueinander fixiert werden können. Mit Bezugszeichen 13 sind die jeweiligen Verriegelungsvorrichtungen eines schlittenartigen Bauteils 12 mit einer daran aufgenommenen Zirkelspitze bezeichnet. In bevorzugter Ausführungsform sind die Verriegelungsvorrichtungen für den Parallelanschlag als Arretierzungen 18 bzw. 19 ausgeführt, die sich besonders einfach durch Stanzen aus Blech herstellen lassen.

In die Aufnahmesektion 14, die in der Darstellung gemäß Figur 11 mit der dort wiedergegebenen Aufnahmeschiene 1 als einstückiges Bauteil gefertigt ist, ist ein Formbügel 26 eingelassen, dessen Spannsektion 37 über den Umfang der Aufnahmesektion 14 hinausragt. An den mit Bezugszeichen 38 bzw. 39 bezeichneten Stellen greifen die Schenkel des Formbügels 26 in die Aussparung 4 eines Aufnahmefußes 3 des Elektrohandwerkzeuges 6 ein, welches in der Öffnung 35 der Aufnahmesektion 14 zur Aufnahme des Elektrohandwerkzeuges 6 ausgebildet ist. In schematischer Andeutung ist die Führungsfläche 10 eines Parallelanschlages 9 wiedergegeben, welcher an den mit Position 13 bezeichneten Verriegelungen für den Parallelanschlag am schlittenförmigen Bauteil 12 mit Zirkelspitze verrastbar ist.

Ferner geht aus der Darstellung gemäß Figur 11 hervor, daß auch die Aufnahmesektion 14 gemäß Figur 11 mit einem Exzenterhebel 24 versehen ist, welcher um eine Exzenterhebellagerung 25 verschwenkbar ist. Mittels des Exzenterhebels 24 läßt sich ein Klemmbügel der Aufnahmesektion 14 von einer Offenstellung in eine Schließstellung und umgekehrt bewegen, so daß die Aufnahmesektion 14 mit dem Aufnahmefuß 3 des in der Öffnung 35 aufzunehmenden Elektrohandwerkzeuges 6 verspannbar ist. Der Darstellung gemäß Figur 11 ist darüber hinaus eine Variante zur Erzielung einer Klemmwirkung zwischen einem Aufnahmefuß 3 und einer einteilig konfigurierten Aufnahmesektion 14 mit angespritzter Aufnahmeschiene 1 zu entnehmen. Mittels eines um eine Achse 25 bewegbaren Exzenterhebels 24, der auf eine Klemmbacke 48 einwirkt, kann die an der Klemmbacke ausgeführte Klemmnase 50 durch eine Öffnung 51 der Öffnung 35 einen Aufnahmefuß 3 in dieser drehfest arretieren. Durch den Exzenterhebel 24 wird die Klemmbacke 48 in eine Ausnehmung 49 gedrückt, wobei die Auslenkung der Klemmbacke 48 ein Einfahren der an der Klemmbacke 48 ausgeführten Klemmnase 50 in den Umfang der Aufnahmeöffnung 35 zur Aufnahme des Aufnahmefußes 3 des Elektrohandwerkzeuges 6 bewirkt.

Aus der Darstellung gemäß Figur 12 schließlich geht ein Formbügel hervor, der in eine Aussparung einer alternativ konfigurierten einstückigen Aufnahmeschiene/Aufnahmesektion-Anordnung eingelassen ist. Der Formbügel 26 steht mit seiner Spannsektion 37 über den Umfang der Aufnahmesektion 14 hervor. Die an den Schenkeln des Formbügels 26 jeweils konfigurierten Rastnasen 38 bzw. 39 ragen in die Begrenzung der Öffnung 35 zur Aufnahme eines Elektrohandwerkzeuges 6 hinein und somit in die als Umlauf mitgestaltete Aussparung 4 des Aufnahmefußes 3 eines in der Öffnung 35 zu fixierenden Elektrohandwerkzeuges 6 hinein. Mit Bezugszeichen 15 ist an der Aufnahmeschiene 1 eine Klemmschraube bezeichnet, bei deren halber bzw. dreiviertel Umdrehung die beiden U-Profile der Aufnahmeschiene 1 in bestimmten Arbeitspositionen zueinander feststellbar sind.

Unterhalb der Aufnahmesektion 14 ist ein Parallelanschlag 9 bezeichnet, der in oben beschriebener Weise an einem schlittenartig konfigurierten Bauteil 12 mit daran aufgenommener Zirkelspitze verrastbar ist. Aus der Darstellung gemäß Figur 12 geht hervor, daß die Zirkelspitze des schlittenartigen Bauteiles von einer verschwenkbaren Schutzkappe 45 umschlossen ist, so daß der Anwender vor Verletzung an der spitz auslaufenden Zirkelspitze am schlittenartigen Bauteil 12 geschützt ist. In der Darstellung gemäß Figur 12 sind Aufnahmeschiene 1 und Aufnahmesektion 14 als einstückiges Bauteil als Spritzgußbauteil gefertigt, wobei die Aufnahmesektion 14 zumindest halbkreisförmig von einer Aussparung 34 durchsetzt ist, in der der Formbügel 26, bevorzugt als eindimensionales Drahtbiegeteil gefertigt, aufgenommen ist.

### Bezugszeichenliste

- 1: Aufnahmeschiene
- 2: Drehgriff
- 2a: Bohrung
- 3: Aufnahmefuß
- 4: Aussparung
- 5: Spanaustrag
- 6: Elektrohandwerkzeug
- 7: Symmetrieachse Elektrohandwerkzeug
- 8: spanabhebendes Werkzeug
- 9: Parallelanschlag
- 10: Führungsfläche
- 11: Aussparung für spanabhebendes Werkzeug
- 12: Zirkelspitzenschlitten
- 12a: Zirkelspitze
- 13: Verriegelung Parallelanschlag
- 14: Aufnahmesektion
- 14a: erste Aussparung
- 14b: zweite Aussparung
- 15: Klemmschraube
- 16: Steg Schlitten 12
- 17: Steg Schlitten 12
- 17a: Arretiernoppen
- 18: Arretierzunge Parallelanschlag
- 19: Arretierzunge Parallelanschlag
- 19a: Arretierausnehmung
- 20: Klemmfläche Aufnahmeschiene
- 21: Öffnung Schlitten 12
- 22: Öffnung Schlitten 12
- 23: Klemmbügellagerung
- 23a: Klemmbügel
- 24: Exzenterhebel
- 25: Exzenterhebellagerung
- 26: Formbügel
- 27: Arretierungsbohrung Aufnahmesektion
- 28: Arretierungsbohrung Aufnahmesektion
- 29: Schließstellung Exzenterhebel
- 30: Offenstellung Exzenterhebel
- 31: Offenstellung Formbügel
- 32: Arbeitsposition Formbügel
- 33: verformte Sektion Formbügel
- 34: Aussparung Aufnahmesektion
- 34a: Stütsstirnfläche
- 35: Öffnung für Aufnahmefuß des Elektrohandwerkzeugs
- 36: Zentrierung
- 37: Spannsektion
- 38: Rastnase vorne
- 39: Rastnase hinten
- 40: Anschlagfläche Spannsektion
- 41: Formnase
- 42: Formnase
- 43: geöffnete Stellung
- 44: Arbeitsposition
- 45: Schutzkappe für Zirkelspitze
- 46: Rasthaken
- 47: geriffelte Fläche
- 48: Klemmbacke
- 49: Ausnehmung
- 50: Klemmnase
- 51: Öffnung

## Patentansprüche

1. Elektrohandwerkzeug mit einem in einem Gehäuse aufgenommenen Elektromotor, welcher ein spanabhebendes Werkzeug (8) antreibt und einen Aufnahmefuß (3) umfasst, **dadurch gekennzeichnet, dass** am Aufnahmefuß (3) des Elektrohandwerkzeuges (6) eine Aufnahmesektion (14) eine Aussparung (4, 34) aufweist, mit der diese mittels eines Formbügels (26) werkzeuglos kuppelbar und in axialer Richtung verrastbar ist, an der funktionserweiternde Anbauten (9, 10; 12) verstellbar positionierbar sind.

2. Elektrohandwerkzeug gemäß Anspruch 1, **dadurch gekennzeichnet, dass** die Aufnahmesektion (14) mit einer eine Öffnung (35) für den Aufnahmefuß (3) des Elektrohandwerkzeugs (6) zumindest halbkreisförmig umschließenden Aussparung (34) versehen ist.

3. Elektrohandwerkzeug gemäß Anspruch 2, **dadurch gekennzeichnet, dass** in die Aussparung (34) der Aufnahmesektion (14) ein eindimensionaler Formbügel (26) eingelassen ist.

4. Elektrohandwerkzeug gemäß Anspruch 2, **dadurch gekennzeichnet, dass** an der dem Aufnahmefuß (3) zuweisenden Stirnseite oberhalb der Aufnahmesektion (34) eine Stirnstützfläche (34a) ausgebildet ist.

5. Elektrohandwerkzeug gemäß Anspruch 2, **dadurch gekennzeichnet, dass** in der Aufnahmesektion (14) mindestens eine Arretierungsbohrung (27, 28) zur Aufnahme der Enden des Formbügels (26) ausgebildet ist.

6. Elektrohandwerkzeug gemäß Anspruch 3, **dadurch gekennzeichnet, dass** der Formbügel (26) eine halbkreisförmige Spannsektion (37) und an beiden Fonnbügelschenkeln ausgebildete Rastnasen (38, 39) umfasst.

## Claims

1. Portable electric tool having an electric motor which is accommodated in a housing and which drives a cutting tool (8) and comprises a locating foot (3), **characterized in that**, on the locating foot (3) of the portable electric tool (6), a locating section (14) has a recess (4, 34) with which the latter can be coupled by means of a shaped clip (26) without the use of a tool and can be latched in the axial direction, and on which locating section (14) function-expanding attached accessories (9, 10; 12) can be positioned in an adjustable manner.

2. Portable electric tool according to Claim 1, **characterized in that** the locating section (14) is provided with a recess (34) enclosing an opening (35) for the locating foot (3) of the portable electric tool (6) at least in a semicircle.

3. Portable electric tool according to Claim 2, **characterized in that** a one-dimensional shaped clip (26) is let into the recess (34) of the locating section (14).

4. Portable electric tool according to Claim 2, **characterized in that** an end supporting surface (34a) is formed on that end face of the locating section (14) which is assigned to the locating foot (3).

5. Portable electric tool according to Claim 2, **characterized in that** at least one locking hole (27, 28) for accommodating the ends of the shaped clip (26) is formed in the locating section (14).

6. Portable electric tool according to Claim 3, **characterized in that** the shaped clip (26) comprises a semicircular clamping section (37) and latching lugs (38, 39) formed on both shaped-clip legs.

## Revendications

1. Outil portatif électrique avec, logé dans un boîtier, un moteur électrique qui entraîne un outil (8) à enlèvement de copeaux et présente un pied de réception (3),
**caractérisé en ce que**
sur le pied de réception (3) de l'outil portatif électrique (6), une section de réception (14) présente un évidement (30, 34) par lequel cette section peut sans outil être accouplée au moyen d'un étrier de forme (26) et être bloquée en direction axiale, et des pièces rapportées (9, 10 ; 12) augmentant la fonctionnalité de l'outil peuvent être positionnées de manière réglable sur cette section.

2. Outil portatif électrique selon la revendication 1,
**caractérisé en ce que**
la section de réception (14) présente un évidement (34) entourant au moins en demi-cercle une ouverture (35) destinée au pied de réception (3) de l'outil portatif électrique (6).

3. Outil portatif électrique selon la revendication 2,
**caractérisé en ce qu'**
un étrier de forme (26) unidimensionnel est inséré dans l'évidement (34) de la section de réception (14).

4. Outil portatif électrique selon la revendication 2,
**caractérisé en ce que**
sur la face frontale regardant le pied de réception (3), au-dessus de la section de réception (14) est réalisée une portée d'appui frontale (34a).

5. Outil portatif électrique selon la revendication 2,
**caractérisé en ce que**
la section de réception (14) présente au moins un perçage d'arrêt (27, 28) pour accueillir les extrémités de l'étrier de forme (26).

6. Outil portatif électrique selon la revendication 3,
**caractérisé en ce que**
l'étrier de forme (26) présente une section de serrage (37) en forme de demi-cercle et, sur ses deux ailes des nez de blocages (38, 39).
